# EUROPEAN PATENT APPLICATION

(11) **EP 4 796 506 A1**
(43) Date of publication of application: **26.08.2026**
(21) Application number: 24879489.3
(22) Date of filing: 18.09.2024
(51) Int. Cl.: C02F 3/06, B01D 63/04

(54) **WATER TREATMENT METHOD, HOLLOW FIBER MEMBRANE ELEMENT, HOLLOW FIBER MEMBRANE UNIT, AND WATER TREATMENT DEVICE**

(30) Priority: 19.10.2023 JP 2023180050
(71) Applicant: Mitsubishi Chemical Corporation, Tokyo 100-8251 (JP)
(72) Inventor: KIGO, Yunje, Tokyo 100-8251 (JP)
(74) Representative: Hoffmann Eitle
(86) International application number: PCT/JP2024/033285
(87) International publication number: WO 2025/084062

(57) **Abstract**

The object is to provide a water treatment method which has a simple structure and can efficiently discharge condensed water in hollow fiber membranes of each hollow fiber membrane element. A wastewater treatment method using a hollow fiber membrane unit including a plurality of hollow fiber membrane elements, the method including: supplying an oxygen-containing gas to each of the plurality of hollow fiber membrane elements immersed in water to be treated; allowing the oxygen-containing gas to permeate from inside to outside of a plurality of hollow fiber membranes constituting the plurality of hollow fiber membrane elements and forming a microorganism layer on a surface of each of the hollow fiber membranes; discharging condensed water generated in the hollow fiber membranes together with a residual gas of the oxygen-containing gas not permeated through the hollow fiber membranes; and individually controlling a discharge amount of the residual gas discharged from each of the plurality of hollow fiber membrane elements.

## Description

### Technical Field

The present invention relates to a water treatment method, a hollow fiber membrane element, a hollow fiber membrane unit, and a water treatment device.

The present application claims priority based on Japanese Patent Application No. 2023-180050 filed in Japan on October 19, 2023, the content of which is incorporated herein by reference.

### Background Art

A treatment for removing, for example, organic substances contained in raw water for water purification such as river water and groundwater or in wastewater is performed. In particular, it has been known that industrial wastewater or domestic wastewater is subjected to the treatment for removing, for example, organic substances contained in the industrial wastewater or domestic wastewater, and then reused as industrial water or discharged to rivers or the like.

As the water treatment method, there has been proposed a water treatment by a bioreactor, a so-called membrane aerated biofilm reactor (MABR), in which a microorganism layer (biofilm) derived from, for example, a microorganism in wastewater is formed on the surface of a hollow fiber membrane that is a gas permeable membrane, and oxygen is supplied to the microorganism layer from the inner surface side of the hollow fiber membrane.

In the MABR, for example, a hollow fiber membrane unit including a plurality of hollow fiber membrane elements is immersed in wastewater which is water to be treated. In each of the plurality of hollow fiber membrane elements, a plurality of hollow fiber membranes are collected in a sheet shape and gas pipes are connected to the upper and lower sides of the plurality of hollow fiber membranes.

Even when a gas supplied to each of the plurality of hollow fiber membrane elements is sufficiently dehumidified, water vapor permeating the membranes from the wastewater and entering the inside of the hollow fiber membrane or water vapor contained in the gas (such as oxygen and air) supplied to the hollow fiber membrane elements may condense, and water (condensed water) may be generated inside the hollow fiber membranes. When water is present inside the hollow fiber membranes, the oxygen permeability coefficient of the hollow fiber membrane decreases and an effective membrane area decreases, and thus, a decrease in operation efficiency is caused.

Patent Literature 1 discloses a membrane module in which an upper manifold connected to an upper header of each of a plurality of hollow fiber membrane elements and a lower manifold connected to a lower header of each of the hollow fiber membrane elements are provided, and water inside the hollow fiber membranes of the respective hollow fiber membrane elements is merged in the lower manifold and discharged through a discharge pipe.

### Citation List

### Patent Literature

Patent Literature 1: WO 2019/159667 A

### Summary of Invention

### Technical Problem

However, a known membrane module as in Patent Literature 1 has a complicated structure, for example, including an upper manifold and a lower manifold connected to a plurality of hollow fiber membrane elements. Thus, the production process is complicated and it is also disadvantageous in terms of cost. In addition, although there is a variation in the amount of condensed water generated inside the hollow fiber membranes of each of the plurality of hollow fiber membrane elements, the discharge of the condensed water cannot be individually controlled for each of the plurality of hollow fiber membrane elements. Thus, it is difficult to efficiently discharge the condensed water from the hollow fiber membranes of all the hollow fiber membrane elements, and the operation efficiency of the wastewater treatment is low.

The present invention is directed to provide a water treatment method which has a simple structure and can efficiently discharge condensed water in a hollow fiber membrane of each hollow fiber membrane element, and the hollow fiber membrane element and a hollow fiber membrane unit which can be suitably used in the water treatment method.

### Solution to Problem

In view of the above problems, the present inventors have found that it is possible to efficiently discharge condensed water generated in each of the plurality of hollow fiber membrane elements, in hollow fiber membranes of each of the plurality of hollow fiber membrane elements by adopting a method of individually controlling the discharge of the condensed water and a structure including a condensed water discharge mechanism in communication with gas passage pipes of upper and lower portions of the hollow fiber membrane elements, respectively, and thus, have completed the present invention.

The present invention includes the following configurations.
[1] A water treatment method using a hollow fiber membrane unit including a plurality of hollow fiber membrane elements, the method including:
   supplying an oxygen-containing gas to each of the plurality of hollow fiber membrane elements immersed in water to be treated;
   allowing the oxygen-containing gas to permeate from inside to outside of a plurality of hollow fiber membranes constituting the plurality of hollow fiber membrane elements and forming a microorganism layer on a surface of each of the hollow fiber membranes;
   discharging condensed water generated in each of the hollow fiber membranes together with a residual gas of the oxygen-containing gas that does not permeate through each of the hollow fiber membranes; and
   individually controlling a discharge amount of the residual gas discharged from each of the plurality of hollow fiber membrane elements.
[2] The water treatment method according to [1], wherein
   each of the hollow fiber membrane elements includes the plurality of hollow fiber membranes, the plurality of hollow fiber membranes being gas permeable membranes, a first gas passage pipe, a second gas passage pipe, and a condensed water discharge mechanism, and is provided with a gas supply port for supplying the oxygen-containing gas and a gas discharge port,
   each of the hollow fiber membranes is disposed in such a manner that a length direction of each of the hollow fiber membranes is a vertical direction,
   the first gas passage pipe is a pipe for passage of the oxygen-containing gas supplied from the gas supply port, and is disposed to extend in a horizontal direction in a state of being connected to upper ends of the plurality of hollow fiber membranes,
   the second gas passage pipe is a pipe for passage of the residual gas of the oxygen-containing gas that does not permeate through the hollow fiber membranes, and is disposed to extend in the horizontal direction in a state of being connected to lower ends of the plurality of hollow fiber membranes,
   the condensed water discharge mechanism is a tubular member and is disposed in parallel to the hollow fiber membranes with both ends of the condensed water discharge mechanism being connected to the first gas passage pipe and the second gas passage pipe,
   an inside of the first gas passage pipe, insides of the plurality of hollow fiber membranes, an inside of the second gas passage pipe, and an inside of the condensed water discharge mechanism are in communication with each other in this order and thus, a flow path is formed, and
   the gas discharge port for discharging the condensed water generated inside the plurality of hollow fiber membranes together with the residual gas through the flow path is provided in an upper portion of each of the hollow fiber membrane elements.
[3] The water treatment method according to [2], wherein a supply amount (L/min) of the oxygen-containing gas to the hollow fiber membrane elements and an internal diameter r (mm) of the condensed water discharge mechanism are adjusted in such a manner that a flow rate of the residual gas in the condensed water discharge mechanism is from 0.3 to 8 m/s.
[4] The water treatment method according to any one of [1] to [3], wherein a microorganism layer derived from a microorganism or a bacterium in the water to be treated is formed on the surface of the plurality of hollow fiber membranes.
[5] A hollow fiber membrane element including a plurality of hollow fiber membranes which are gas permeable membranes, a first gas passage pipe, a second gas passage pipe, and a condensed water discharge mechanism, the hollow fiber membrane element being provided with a gas supply port for supplying an oxygen-containing gas and a gas discharge port, and the hollow fiber membrane element being immersed in water to be treated, wherein
   the plurality of hollow fiber membranes are disposed in such a manner that a length direction of the plurality of hollow fiber membranes is a vertical direction,
   the first gas passage pipe is a pipe for passage of the oxygen-containing gas supplied from the gas supply port, and is disposed to extend in a horizontal direction in a state of being connected to upper ends of the plurality of hollow fiber membranes,
   the second gas passage pipe is a pipe for passage of a residual gas of the oxygen-containing gas that does not permeate through the hollow fiber membranes, and is disposed to extend in the horizontal direction in a state of being connected to lower ends of the hollow fiber membranes,
   the condensed water discharge mechanism is a tubular member and is disposed in parallel to the hollow fiber membranes with both ends of the condensed water discharge mechanism being connected to the first gas passage pipe and the second gas passage pipe,
   an inside of the first gas passage pipe, insides of the plurality of hollow fiber membranes, an inside of the second gas passage pipe, and an inside of the condensed water discharge mechanism are in communication with each other in this order and thus, a flow path is formed, and
   the gas discharge port for discharging condensed water generated inside the plurality of hollow fiber membranes together with the residual gas through the flow path is provided in an upper portion of the hollow fiber membrane element.
[6] The hollow fiber membrane element according to claim 5, wherein the condensed water discharge mechanism is a hollow support column.
[7] The hollow fiber membrane element according to [5] or [6], wherein one end of a gas discharge pipe is connected to the gas discharge port, and the other end of the gas discharge pipe is disposed above a liquid level.
[8] The hollow fiber membrane element according to [6], wherein a ratio r/R of an inner diameter r (mm) of the support column to an outer diameter R (mm) of the support column is from 0.50 to 0.70.
[9] The hollow fiber membrane element according to any one of [5] to [8], further including a gas supply amount control unit that is configured to control a supply amount of the oxygen-containing gas to the gas supply port.
[10] The hollow fiber membrane element according to any one of [5] to [9], further including a gas discharge amount control that is configured to control a discharge amount of the residual gas from the gas discharge port.
[11] The hollow fiber membrane element according to any one of [5] to [10], wherein a microorganism layer derived from a microorganism or a bacterium is formed on a surface of the hollow fiber membranes.
[12] A hollow fiber membrane unit including a plurality of the hollow fiber membrane elements described in any one of [5] to [11], wherein
   gas supply paths to the gas supply ports of the respective hollow fiber membrane elements are independent of each other, and gas discharge paths from the gas discharge ports of the respective hollow fiber membrane elements are independent of each other.
[13] A water treatment device including one or more hollow fiber membrane units described in [12].

### Advantageous Effects of Invention

According to the present invention, a water treatment method that has a simple structure and can efficiently discharge condensed water in a hollow fiber membrane of each of the hollow fiber membrane elements, and a hollow fiber membrane element, a hollow fiber membrane unit, and a water treatment device that can be suitably used in the water treatment method are provided.

### Brief Description of Drawings

FIG. 1 is a perspective view illustrating a hollow fiber membrane element according to an example of an embodiment.
FIG. 2 is a front view of the hollow fiber membrane element of FIG. 1.
FIG. 3 is a perspective view illustrating a hollow fiber membrane unit according to an example of an embodiment.
FIG. 4 is a schematic view illustrating a state of performing a water treatment method according to an example of an embodiment.
FIG. 5 is a graph showing a relationship between a flow rate of a residual gas and a lifting height of condensed water in a condensed water discharge mechanism of Experiment Example.

### Description of Embodiments

In the present specification and claims, when the description of "from ... to ..." is used to indicate a numerical range, the numerical range includes numerical values described before and after the word "to" as a lower limit value and an upper limit value. For example, "from A to B" means A or more and B or less.

A water treatment method according to an embodiment is a water treatment method using a hollow fiber membrane unit including a plurality of hollow fiber membrane elements, and is a method including the following (i) to (iv).
(i) Supplying an oxygen-containing gas to each of the plurality of hollow fiber membrane elements immersed in water to be treated.
(ii) Allowing the oxygen-containing gas to permeate from inside to outside of the plurality of hollow fiber membranes constituting the plurality of hollow fiber membrane elements and forming a microorganism layer on the surface of each of the hollow fiber membranes.
(iii) Discharging condensed water generated in each of the hollow fiber membranes together with a residual gas of the oxygen-containing gas that does not permeate through the hollow fiber membranes.
(iv) Individually controlling a discharge amount of the residual gas discharged from each of the plurality of hollow fiber membrane elements.

Examples of the water to be treated by the water treatment method according to an embodiment include typically, but are not limited to, wastewater such as industrial wastewater or domestic wastewater. For example, raw water for water purification such as river water or underground water may be used as the water to be treated.

### Hollow Fiber Membrane Element

First, a hollow fiber membrane element that can be suitably used in the water treatment method according to an embodiment will be described with reference to the drawings.

Note that dimensions and the like in the drawings exemplified in the following description are illustrative, and the present invention is not necessarily limited thereto, and can be appropriately modified and implemented without changing the gist of the invention.

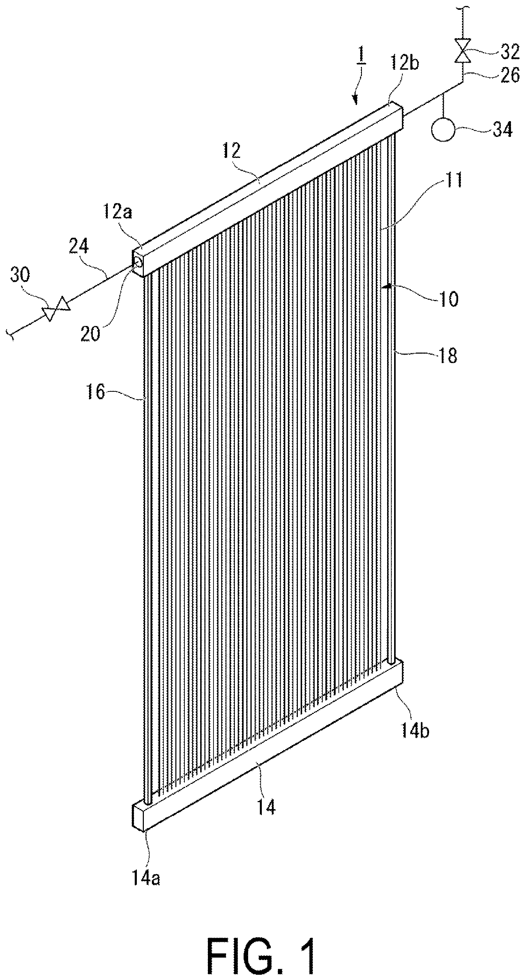

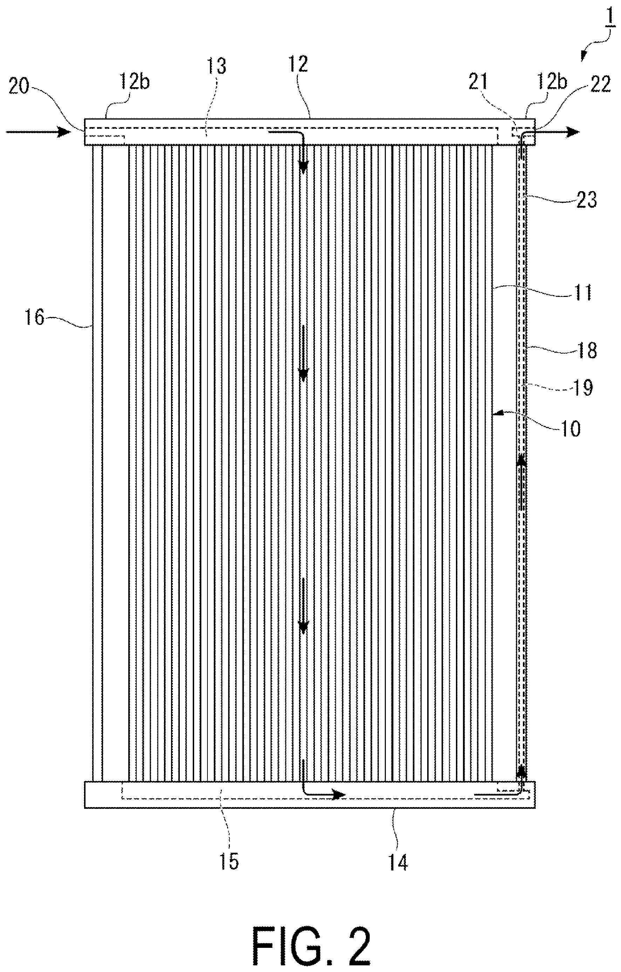

FIG. 1 is a perspective view illustrating a hollow fiber membrane element 1 according to an example of an embodiment. FIG. 2 is a front view of the hollow fiber membrane element 1.

The hollow fiber membrane element 1 includes a hollow fiber membrane sheet10 including a plurality of hollow fiber membranes 11, a first gas passage pipe 12, a second gas passage pipe 14, a support mechanism 16, and a condensed water discharge mechanism 18.

In the hollow fiber membrane element 1, the first gas passage pipe 12 and the second gas passage pipe 14 are disposed to extend in the horizontal direction respectively, with the first gas passage pipe 12 on the upper side and the second gas passage pipe 14 on the lower side. Both ends of the support mechanism 16 are connected to a first end 12a of the first gas passage pipe 12 and a first end 14a of the second gas passage pipe 14, and both ends of the condensed water discharge mechanism 18 are connected to a second end 12b of the first gas passage pipe 12 and a second end 14b of the second gas passage pipe 14.

The support mechanism 16 is not particularly limited as long as the support mechanism 16 has a function of supporting the first gas passage pipe 12 and the second gas passage pipe 14. Examples of the support mechanism 16 include a hollow support column and a solid support column.

The condensed water discharge mechanism 18 is not particularly limited as long as the inside of the condensed water discharge mechanism 18 is in communication with the inside of the first gas passage pipe 12 and the inside of the second gas passage pipe 14, respectively, and has a function of discharging condensed water in the hollow fiber membranes of the hollow fiber membrane element. As the condensed water discharge mechanism 18, a tubular member can be used, and examples thereof include a hollow support column and a hollow tube.

When the condensed water discharge mechanism 18 also has a function of supporting the first gas passage pipe 12 and the second gas passage pipe 14, the stability of the hollow fiber membrane element 1 is improved. From this viewpoint, a hollow support column is preferable as the condensed water discharge mechanism 18.

In addition, when the condensed water discharge mechanism 18 also has the function of supporting the first gas passage pipe 12 and the second gas passage pipe 14, from the viewpoint of further simplifying the structure of the hollow fiber membrane element 1, an aspect in which only a hollow support column is provided as the condensed water discharge mechanism 18 without providing the support mechanism 16 is also preferable.

The example illustrated in FIG. 1 is a case where both the support mechanism 16 and the condensed water discharge mechanism 18 are hollow support columns.

In this example, the first gas passage pipe 12 and the second gas passage pipe 14 are supported by the support mechanism 16 and the condensed water discharge mechanism 18 extending in the vertical direction, and thus, a rectangular frame shape is formed.

The hollow fiber membrane sheet 10 is formed by arranging the plurality of hollow fiber membranes 11 in a sheet form, and is disposed between the support mechanism 16 and the condensed water discharge mechanism 18 in a state where the upper end of each of the plurality of hollow fiber membranes 11 is connected to the first gas passage pipe 12 and the lower end of each of the plurality of hollow fiber membranes 11 is connected to the second gas passage pipe 14. The length direction of each of the plurality of hollow fiber membranes 11 corresponds to the vertical direction, and is parallel to the support mechanism 16 and the condensed water discharge mechanism 18. The distance between the first gas passage pipe 12 and the second gas passage pipe 14 is kept constant by being supported by the support mechanism 16 and the condensed water discharge mechanism 18, and thus, the hollow fiber membrane element 1 having a flat shape in which the planar form of the hollow fiber membrane sheet 10 is maintained is formed.

Note that the hollow fiber membrane element 1 is not limited to a flat shape, and can be configured to have, for example, a cylindrical shape, or a square cylindrical shape.

The upper end of each of the plurality of hollow fiber membranes 11 is attached to the first gas passage pipe 12 in such a manner that the interiors of the plurality of hollow fiber membranes 11 and a flow path 13 inside the first gas passage pipe 12 are in communication with each other. The lower end of each of the plurality of hollow fiber membranes 11 is attached to the first gas passage pipe 12 in such a manner that the interiors of the plurality of hollow fiber membranes 11 and a flow path 15 inside the second gas passage pipe 14 are in communication with each other.

A form in which the upper end of each of the plurality of hollow fiber membranes 11 is attached to the first gas passage pipe 12 is not particularly limited, and a known form can be adopted. Examples thereof include a form in which each of the plurality of hollow fiber membranes 11 is fixed to the first gas passage pipe 12 with a potting resin while the upper end surface of each of the plurality of hollow fiber membranes 11 is opened inside the first gas passage pipe 12. The same applies to the form in which the lower end of each of the plurality of hollow fiber membranes 11 is attached to the second gas passage pipe 14. That is, for example, a form in which the lower end portion of each of the plurality of hollow fiber membranes 11 is fixed to the first gas passage pipe 12 with the potting resin while the lower end surface of each of the plurality of hollow fiber membranes 11 is opened inside the second gas passage pipe 14 is exemplified.

Examples of the potting resin include an epoxy resin, an unsaturated polyester resin, a polyurethane resin, a silicone-based filler, and various hot-melt resins. The potting resin forming a potting portion may be used alone or in combination of two or more thereof.

The number of the plurality of hollow fiber membranes 11 constituting the hollow fiber membrane sheet 10 is not particularly limited, and can be, for example, 10000 to 50000.

The hollow fiber membrane sheet 10 may be constituted by one sheet formed of the plurality of hollow fiber membranes 11, or may be constituted by a laminate in which a plurality of sheets, each of the sheets being formed of the plurality of hollow fiber membranes 11, are laminated.

As the plurality of hollow fiber membranes 11, there can be used hollow fiber-shaped gas permeable membranes used for water treatment by MABR, that is, gas permeable membranes for water treatment in which a microorganism layer derived from a microorganism or a bacterium in water to be treated is formed on the surfaces. More specifically, there can be used the plurality of hollow fiber membranes that allow oxygen to permeate from the inner surface sides toward the surfaces by supplying oxygen to the hollow portions, and the plurality of hollow fiber membranes preferably include a non-porous layer as described below.

The shape of the plurality of hollow fiber membranes 11 is not particularly limited, and may be, for example, a substantially cylindrical shape. However, the term "substantially cylindrical shape" means a three-dimensional shape in which the shape of any cross-section perpendicular to the longitudinal direction is a true circle shape, or an oval shape such as an ovoid shape, an ellipse shape, or an ellipsoid shape.

Any one of the plurality of hollow fiber membranes 11 may be a monolayer membrane or a multilayer membrane.

Examples of the hollow fiber membrane formed of the monolayer membrane include a hollow fiber membrane formed of a non-porous layer.

Examples of the hollow fiber membrane formed of the multilayer membrane include a hollow fiber membrane having a three-layer structure in which a non-porous layer is disposed between two porous layers. The two porous layers are each constituted by a membrane having a plurality of pores, and are concentrically arranged with the non-porous layer interposed between the two porous layers. The term "pore" means a communication hole extending at least from the inner surface side to the surface. At the interfaces between each of the two porous layers and the non-porous layer, the region formed of each of the porous layers and the region formed of the non-porous layer may slightly interpenetrate each other.

The total thickness of the two porous layers is preferably 10 µm or more, more preferably 15 µm or more, and still more preferably 20 µm or more. When the total thickness of the porous layers is the above lower limit value or more, the mechanical strength of the hollow fiber membranes can be easily ensured. The total thickness of the porous layers is preferably 100 µm or less, more preferably 90 µm or less, and still more preferably 80 µm or less. When the total thickness of the porous layers is the above upper limit value or less, it is possible to suppress a decrease in the filling amount of the membranes when the hollow fiber membranes are modularized. The lower limit and the upper limit of the total thickness of the porous layers can be optionally combined, and for example, the total thickness is preferably from 10 to 100 µm, more preferably from 15 to 90 µm, and still more preferably from 20 to 80 µm.

Note that the thickness of each of the porous layers is determined by observing, with a scanning electron microscope (SEM), cross-sections perpendicular to the longitudinal direction at any five positions of the hollow fiber membranes, analyzing the images, and calculating the average value of the measured thicknesses of the porous layer.

The average pore size of the plurality of pores formed in each of the porous layers is preferably 0.01 µm or more, more preferably 0.03 µm or more, and still more preferably 0.05 µm or more. When the average pore size is the lower limit value or more, the pores are less likely to be a resistance that affects oxygen permeation. The average pore size of the plurality of pores formed in each of the porous layers is preferably 5 µm or less, more preferably 4 µm or less, and still more preferably 3 µm or less. When the average pore size is the above upper limit value or less, sufficient membrane strength can be easily obtained. The lower limit and the upper limit of the average pore size can be optionally combined, and for example, the average pore size is preferably from 0.01 to 5 µm, more preferably from 0.03 to 4 µm, and still more preferably from 0.05 to 3 µm.

Note that the average pore size is a value obtained by observing the surface portion of each of the porous layers using a SEM, randomly selecting 30 pores, measuring the maximum major axis diameter of each pore, and averaging the maximum major axis diameters.

The material constituting each of the porous layers preferably contains one or more selected from a polyolefin resin, a polyurethane resin, and a fluororesin from the viewpoint of further improving the oxygen permeability. The two porous layers may be made of the same material or different materials. In particular, it is preferable that both of the two porous layers are made of a material containing a polyolefin resin.

Each of the porous layers is formed by, for example, a melt-drawing method. In the melt-drawing method, first, a resin serving as the material of each of the porous layers is heated to be in a flowable state equal to or higher than the melting point, and the heated resin is discharged in a cylindrical shape. Next, the discharged resin in the flowable state is cooled to be in a non-flowable state, and the shape is fixed. Thereafter, the resin having the fixed shape is subjected to drawing process under optimal conditions, and thus, a porous structure is formed.

The thickness of the non-porous layer is preferably 0.3 µm or more, more preferably 0.5 µm or more, and still more preferably 1 µm or more. When the thickness of the non-porous layer is the above lower limit value or more, defects are less likely to occur at the time of production, and the non-porous layer can be stably produced. The thickness of the non-porous layer is preferably 10 µm or less, more preferably 8 µm or less, and still more preferably 6 µm or less. When the thickness of the non-porous layer is the above upper limit value or less, it is easy to suppress a decrease in oxygen permeability. The lower limit and the upper limit of the thickness of the non-porous layer can be optionally combined, and for example, the thickness is preferably from 0.3 to 10 µm, more preferably from 0.5 to 8 µm, and still more preferably from 1 to 6 µm.

Note that the thickness of the non-porous layer is obtained by observing, with a scanning electron microscope (SEM), cross-sections perpendicular to the longitudinal direction at any five positions of the hollow fiber membranes, analyzing the images, and calculating the average value of the measured thicknesses of the non-porous layer.

The material constituting the non-porous layer is preferably a polystyrene resin or a polyolefin resin, more preferably a polyolefin resin, still more preferably a polyethylene resin, and particularly preferably a low-density polyethylene. When the non-porous layer is made of a material containing one or more of the above resins, the overall mechanical strength of the hollow fiber membranes can be increased while sufficient oxygen permeability is ensured. The material constituting the non-porous layer may be used alone or in combination of two or more thereof.

The outer diameter of each of the plurality of hollow fiber membranes 11 is preferably 1 mm or less, and more preferably 0.8 mm or less. When the outer diameter of each of the plurality of hollow fiber membranes 11 is the above upper limit value or less, it is possible to suppress a decrease in the filling amount of the hollow fiber membranes at the time of membrane modularization. The outer diameter of each of the plurality of hollow fiber membranes 11 is preferably 0.05 mm or more, more preferably 0.1 mm or more. When the outer diameter of each of the plurality of hollow fiber membranes 11 is the above lower limit value or more, the inner diameter of each of the hollow portions can be sufficiently ensured, and this makes it possible to reduce the influence of a decrease in flow rate of oxygen flowing through the hollow portions due to, for example, pressure loss. The lower limit and the upper limit of the outer diameter of each of the plurality of hollow fiber membranes 11 can be optionally combined, and for example, the outer diameter is preferably from 0.05 to 1 mm, and more preferably from 0.1 to 0.8 µm.

Note that when the hollow fiber membranes are cut along any plane perpendicular to the longitudinal direction of the hollow fiber membranes, the outer diameter of each of the hollow fiber membranes means the diameter of the smallest circle inscribed in the outer edge of the cut surface, and is determined as an average value of the measurements at any 3 or more and 10 or less positions.

The method for producing the hollow fiber membranes is not particularly limited, and a known method can be used. For example, a hollow fiber membrane which is a monolayer membrane composed of a non-porous layer can be obtained by melt-spinning a resin using a composite spinneret while an extrusion speed and a winding speed are appropriately adjusted, and cooling and solidifying the resin in an undrawn state. The hollow fiber membrane obtained by spinning may be subjected to a fixed-length heat treatment (annealing treatment). In a case of using polyethylene, the fixed-length heat treatment is preferably performed at 105 to 130°C for 8 to 16 hours.

When a hollow fiber membrane composed of a multilayer membrane including a porous layer is produced, the hollow fiber membrane is drawn at a drawing temperature equal to or lower than the Vicat softening temperature of the material forming the porous layer after the fixed-length heat treatment. The drawing may be one-stage drawing, two-stage drawing in which cold drawing is followed by hot drawing, or multi-stage drawing in which cold drawing is followed by hot drawing divided into two or more stages. The temperature of the cold drawing is preferably in a range of 0°C to a temperature lower than the Vicat softening temperature - 20 (°C).

The draw ratio can be appropriately set, and can be, for example, from 2 to 5 times.

The material of the first gas passage pipe 12 and the second gas passage pipe 14 is preferably one having excellent mechanical strength and durability, and examples thereof include polycarbonate, polysulfone, polyolefin, polyvinyl chloride (PVC), an acrylic resin, an ABS resin, and modified polyphenylene ether (PPE). The first gas passage pipe 12 and the second gas passage pipe 14 may be made of one material or two or more materials.

A gas supply port 20 connected to the flow path 13 inside the first gas passage pipe 12 is provided in the first end portion 12a of the first gas passage pipe 12.

The condensed water discharge mechanism 18 is a tubular member, and the interior thereof is a flow path 19 in communication with the flow path 15 of the second gas passage pipe 14. In the second end portion 12b of the first gas passage pipe 12, the condensed water discharge mechanism 18 being connected to the second end portion 12b, a gas discharge port 22 is provided and a flow path 21 connecting the flow path 19 of the condensed water discharge mechanism 18 and the gas discharge port 22 is formed. Inside the first gas passage pipe 12, the flow path 13 and the flow path 21 are separated from each other, and the oxygen-containing gas does not directly flow from the flow path 13 to the flow path 21.

As described above, in the hollow fiber membrane element 1, the inside of the first gas passage pipe 12, the insides of the plurality of hollow fiber membranes 11, the inside of the second gas passage pipe 14, and the inside of the condensed water discharge mechanism 18 are in communication with each other in this order, and thus, a flow path 23 is formed, and the gas discharge port 22 is provided in the upper portion. The flow path 23 is a path in which the flow path 13 of the first gas passage pipe 12, the inside of each of the plurality of hollow fiber membranes 11, the flow path 15 of the second gas passage pipe 14, and the flow path 19 in the condensed water discharge mechanism 18 are connected in this order. The gas supplied from the gas supply port 20 is supplied from the flow path 13 of the first gas passage pipe 12 to the inside of each of the plurality of hollow fiber membranes 11. A part of the oxygen-containing gas supplied to each of the plurality of hollow fiber membranes 11 permeates to the outside of the plurality of hollow fiber membranes 11. The residual gas that does not permeate through the plurality of hollow fiber membranes 11 enters the flow path 15 of the second gas passage pipe 14, passes through the flow path 19 in the condensed water discharge mechanism 18 and the flow path 21 of the first gas passage pipe 12, and is discharged from the gas discharge port 22 in the upper portion. As described above, the condensed water discharge mechanism 18 has a function of supporting the hollow fiber membrane element, a gas discharge function, and a condensed water drainage function, and thus it is not necessary to separately provide a gas discharge mechanism and a condensed water discharge mechanism. Accordingly, it is possible to make a water treatment device including a compact and simple hollow fiber membrane unit.

In water treatment using the hollow fiber membrane element 1, water vapor that permeates through the plurality of hollow fiber membranes 11 and enters the plurality of hollow fiber membranes 11 from water to be treated or water vapor contained in the oxygen-containing gas may condense and form condensed water inside the plurality of hollow fiber membranes 11. However, in the hollow fiber membrane element 1, by increasing the supply amount of the oxygen-containing gas, the force by which the residual gas pushes out the condensed water increases, and thus the condensed water can be discharged together with the residual gas to the outside of the hollow fiber membrane element 1.

The ratio r/R of the inner diameter r (mm) to the outer diameter R (mm) of the condensed water discharge mechanism 18 is preferably from 0.50 to 0.70, and more preferably from 0.51 to 0.60. When the ratio r/R is within the above range, the strength of the condensed water discharge mechanism 18 is sufficiently high.

The length of the condensed water discharge mechanism 18 only needs to be designed depending on, for example, the amount of water supply. For example, the length is preferably from 1.0 to 3.0 m, and more preferably from 1.2 to 2.5 m. When the length of the condensed water discharge mechanism 18 is the above lower limit value or more, the hollow fiber membrane element is sufficiently large, and the membrane area is sufficiently ensured. This makes it possible to avoid a situation in which more hollow fiber membrane elements must be provided in one membrane module to satisfy a required membrane area. Thus, such a length is advantageous in terms of processability and cost of the membrane module. When the length of the condensed water discharge mechanism 18 is the upper limit value or less, the condensed water is easily discharged via the condensed water discharge mechanism 18.

The form of the condensed water discharge mechanism 18 is not particularly limited, and examples thereof include a square tubular shape and a cylindrical shape.

The material of the condensed water discharge mechanism 18 is not particularly limited, and examples thereof include stainless steel (SUS).

The support mechanism 16 may have a tubular shape or a solid columnar shape.

The material of the support mechanism 16 is not particularly limited, and examples thereof include stainless steel (SUS).

A gas supply pipe 24 is connected to the gas supply port 20 provided in the first gas passage pipe 12. The gas supply pipe 24 is provided with a gas supply amount control unit 30 for controlling the supply amount of the oxygen-containing gas to the gas supply port 20.

The gas supply amount control unit 30 may be any means capable of controlling the supply amount of the oxygen-containing gas, and examples thereof include a solenoid valve and a valve.

A gas discharge pipe 26 is connected to the gas discharge port 22 provided in the first gas passage pipe 12. In the water treatment using the hollow fiber membrane element 1, the hollow fiber membrane element 1 is immersed in the water to be treated, but it is preferable that the other end, opposite to one end connected to the gas discharge port 22 in the gas discharge pipe 26, is disposed above a liquid level, and the residual gas and the condensed water are discharged above the liquid level. Accordingly, when the water to be treated is wastewater, it can be suppressed that activated sludge in the wastewater enters and clogs the gas discharge pipe 26.

The gas discharge pipe 26 is provided with a gas discharge amount control unit 32 for controlling the discharge amount of the residual gas from the gas discharge port 22.

The gas discharge amount control unit 32 may be any means capable of controlling the discharge amount of the residual gas, and examples thereof include a solenoid valve and a valve.

The gas discharge pipe 26 may be provided with a pressure gauge 34.

When the amount of condensed water generated inside the plurality of hollow fiber membranes 11 increases, the pressure in the path from the condensed water discharge mechanism 18 to the gas discharge pipe 26 decreases. Thus, by providing the pressure gauge 34 in the gas discharge pipe 26 and monitoring the pressure during the water treatment, the amount of the condensed water present inside the plurality of hollow fiber membranes 11 can be grasped to some extent.

Specifically, when a pressure value measured by the pressure gauge 34 is lower than a preset pressure value, the opening degree of the gas supply amount control unit 30 or the gas discharge amount control unit 32 is increased and the supply amount of the oxygen-containing gas is increased, and thus, the flow rate of the residual gas discharged from the plurality of hollow fiber membranes 11 via the second gas passage pipe 14 and the condensed water discharge mechanism 18 can be increased, and the condensed water can be easily discharged together with the residual gas.

On the other hand, when a pressure value measured by the pressure gauge 34 exceeds the preset pressure value, the opening degree of the gas supply amount control unit 30 or the gas discharge amount control unit 32 is reduced and the supply amount of the oxygen-containing gas is suppressed, and thus, the flow rate of the residual gas discharged from the plurality of hollow fiber membranes 11 via the second gas passage pipe 14 and the condensed water discharge mechanism 18 is reduced, the condensed water and the residual gas are discharged, and the energy consumption amount is also suppressed.

The open/closed state of the gas supply amount control unit 30 or the gas discharge amount control unit 32 may be adjusted manually or may be adjusted by a control panel through a solenoid valve. When the control panel and the solenoid valve are used, the adjustment can be automatically performed while the on-site situation is remotely monitored.

As described above, it is possible to suppress the energy consumption amount while controlling the discharge state of the condensed water, by the open/close state of the gas supply amount control unit 30 or the gas discharge amount control unit 32.

The method for producing the hollow fiber membrane element 1 is not particularly limited, and examples thereof include a method including the following steps (a) to (e).

Step (a): The first end portions and the second end portions of the plurality of hollow fiber membranes 11 bundled into a sheet form are each inserted into potting cases, and a potting resin is injected and cured to fix a hollow fiber membrane sheet to the potting cases.

Step (b): The tip portions of the potting cases to which the plurality of hollow fiber membranes 11 are fixed are cut and thus, the hollow fiber membrane sheet 10 is obtained.

Step (c): The support mechanism 16 and the condensed water discharge mechanism 18 are connected to the first end portion 12a and the second end portion 12b of the first gas passage pipe 12.

Step (d): The support mechanism 16 and the condensed water discharge mechanism 18 are connected to the first end portion 14a and the second end portion 14b of the second gas passage pipe 14.

Step (e): The upper end portion of the hollow fiber membrane sheet 10 is inserted into the first gas passage pipe 12 and fixed by a potting portion, and the lower end portion of the hollow fiber membrane sheet 10 is inserted into the second gas passage pipe 14 and fixed by a potting portion.

### Hollow Fiber Membrane Unit

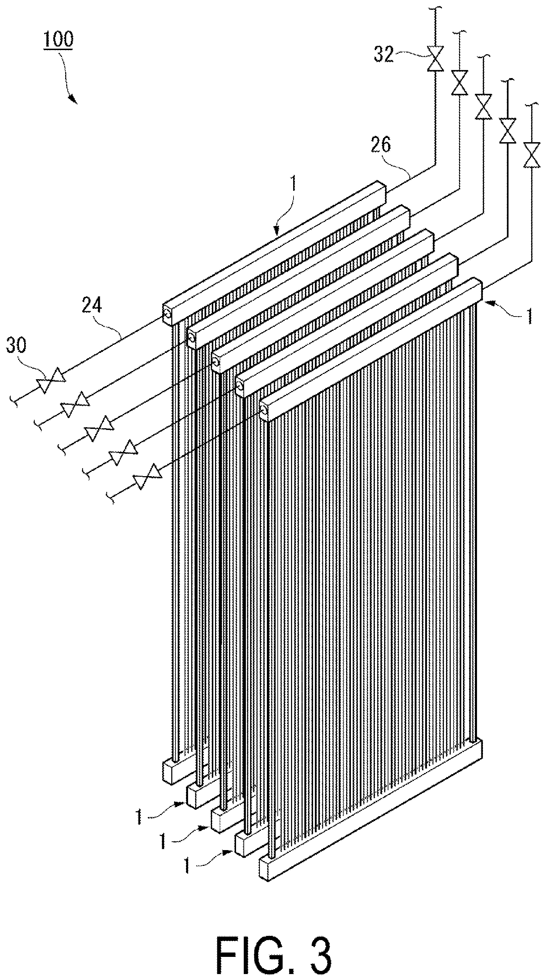

FIG. 3 is a perspective view illustrating a hollow fiber membrane unit 100 according to an example of an embodiment.

The hollow fiber membrane unit 100 includes a plurality of hollow fiber membrane elements 1.

The number of the hollow fiber membrane elements 1 included in the hollow fiber membrane unit 100 can be appropriately set, and can be, for example, from 2 to 30.

In the hollow fiber membrane unit 100, the gas supply pipes 24 (gas supply paths) connected to the gas supply ports 20 of the respective hollow fiber membrane elements 1 are independent of each other, and the gas discharge pipes 26 (gas discharge paths) connected to the gas discharge ports 22 of the respective hollow fiber membrane elements 1 are independent of each other. The hollow fiber membrane unit 100 has a simple structure in which the plurality of hollow fiber membrane elements 1 are not connected to each other as described above, and it is not necessary to additionally install a large pipe for collecting condensed water, which makes the production process less likely to be complicated. In addition, design changes are also facilitated, such as changing the number of the plurality of hollow fiber membrane elements 1 or changing the position of each of the plurality of hollow fiber membrane elements 1 in the height direction.

Furthermore, each of the plurality of hollow fiber membrane elements 1 uses the inside of the condensed water discharge mechanism 18 as a path for discharging a residual gas and condensed water, and thus, the number of pipes for discharging the residual gas and the condensed water can be reduced, which further simplifies the structure.

In the hollow fiber membrane unit 100, the gas supply path and the gas discharge path of each of the plurality of hollow fiber membrane elements 1 are independent, and thus, it is easy to grasp the amount of the condensed water in the plurality of hollow fiber membranes 11 in each of the plurality of hollow fiber membrane elements 1, and it is possible to independently control the flow rate of the residual gas in response to the situation of each of the plurality of hollow fiber membrane elements 1. Accordingly, it is possible to individually set a condition for discharging the condensed water in the plurality of hollow fiber membranes 11 depending on the degree of the amount of the condensed water of each of the plurality of hollow fiber membrane elements 1, and it is possible to suppress a decrease in the oxygen permeability coefficient of the plurality of hollow fiber membranes 11 and a decrease in the operation efficiency due to a decrease in the effective membrane area.

As described above, in the hollow fiber membrane unit 100, the condensed water can be efficiently discharged from each of the plurality of hollow fiber membrane elements 1, and the condensed water can be discharged together by using the force when the residual gas is discharged, which achieves energy saving.

### Water Treatment Device

A water treatment device according to an embodiment is a device including one or more hollow fiber membrane units according to an embodiment. The water treatment device according to an embodiment can employ a known aspect except that the water treatment device includes the hollow fiber membrane unit according to the embodiment described above.

### Water Treatment Method

Hereinafter, as an example of the water treatment method according to an embodiment, a wastewater treatment method using the hollow fiber membrane unit 100 will be described.

The water treatment method using the hollow fiber membrane unit 100 includes the following steps.

Gas supply step: An oxygen-containing gas is supplied to each of the plurality of hollow fiber membrane elements 1 immersed in water to be treated.

Reaction step: The oxygen-containing gas is allowed to permeate from inside to outside of the plurality of hollow fiber membranes 11 constituting the plurality of hollow fiber membrane elements 1, and thus, a microorganism layer on the surface of each of the plurality of hollow fiber membranes 11 is formed.

Discharge step: The condensed water generated inside the plurality of hollow fiber membranes 11 is discharged together with the residual gas of the oxygen-containing gas that does not permeate through the plurality of hollow fiber membranes 11.

Control step: The discharge amount of the residual gas discharged from each of the plurality of hollow fiber membrane elements 1 is individually controlled.

Hereinafter, as an example, a case where wastewater is treated as the water to be treated will be described in more detail.

### Gas Supply Step

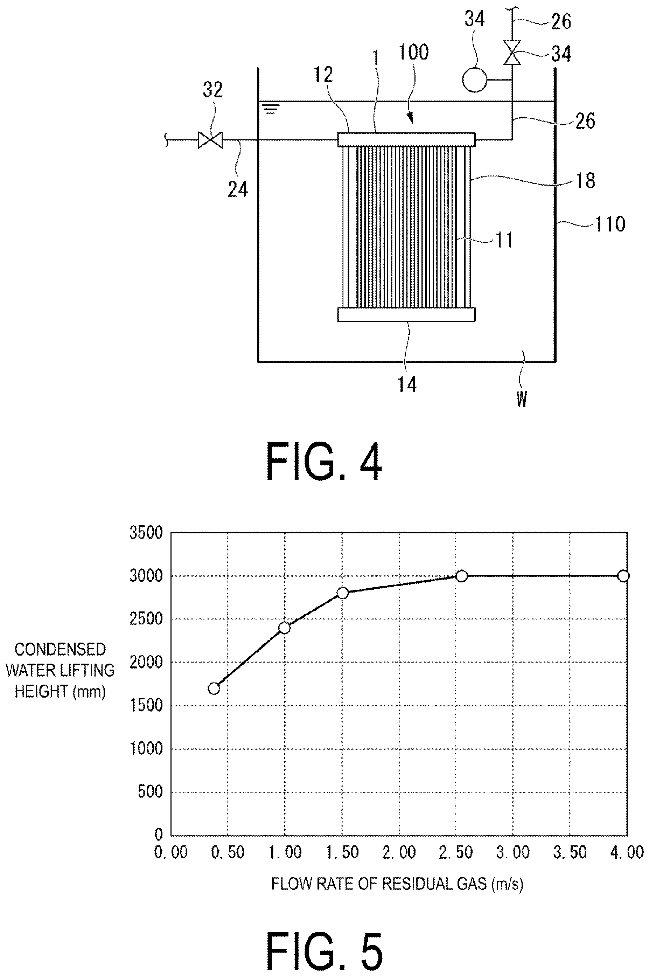

As illustrated in FIG. 4, the hollow fiber membrane unit 100 is installed in a treatment tank 110, and wastewater W used as water to be treated is introduced into the treatment tank 110. At this time, the inside of the treatment tank 110 is filled with the wastewater W such that the hollow fiber membrane unit 100 disposed in the treatment tank 110 is immersed in the wastewater W. In this state, an oxygen-containing gas is supplied from a blower (not illustrated) to each of the hollow fiber membrane elements 1 through each of the gas supply pipes 24.

### Reaction Step

The oxygen-containing gas supplied to each of the hollow fiber membrane elements 1 permeates from the inner surface side to the membrane surface of each of the plurality of hollow fiber membranes 11. In the initial stage of the wastewater treatment, microorganisms, bacteria, and the like present in the wastewater W adhere to the surface of each of the plurality of hollow fiber membranes 11 to form a microorganism layer derived from the microorganisms or bacteria.

A microorganism layer derived from microorganisms or bacteria may be previously formed on the surface of the plurality of hollow fiber membranes 11, by subjecting a microorganism or a bacterium to a proliferation treatment using, as a seed sludge, activated sludge already used in another wastewater treatment plant or the like, adjusting the concentration of the microorganism or the bacterium in the activated sludge to a predetermined concentration, and immersing the hollow fiber membrane elements 1 in the activated sludge. The activated sludge has various component compositions and ratios depending on the type of wastewater, and an activated sludge subjected to proliferation using BOD (organic matter) components contained in wastewater and nutrients such as nitrogen and phosphorus as food can be used.

By continuously supplying oxygen or air to the hollow fiber membrane elements 1, oxygen that permeates through each of the plurality of hollow fiber membranes 11 is dissolved and diffused in the microorganism layer, and an oxygen gradient (concentration) is formed in the membrane thickness direction of the microorganism layer. The inner layer side of the microorganism layer is brought into an aerobic state rich in oxygen, while the outer layer side is brought into an anaerobic state with reduced oxygen. As a result, the microorganism layer is brought into a state where an aerobic treatment region is formed on the inner layer side and an anaerobic treatment region is formed on the outer layer side.

In the aerobic treatment region, oxidation of ammonia contained in the wastewater proceeds by an aerobic treatment (BOD oxidation), and the ammonia is converted into nitric acid. In the anaerobic treatment region, the nitric acid generated in the aerobic treatment region is treated as nitrogen by an anaerobic treatment (BOD oxidation) and is denitrified. In this manner, both the aerobic treatment and the anaerobic treatment are performed in one process in the treatment tank 110.

Air in the atmosphere may be supplied to each of the plurality of hollow fiber membranes 11 of the hollow fiber membrane elements 1, but pure oxygen is preferably supplied. By supplying oxygen having high purity, the concentration of oxygen dissolved and diffused in the microorganism layer is likely to be sufficient, and the wastewater treatment capacity is improved. The air is preferably used in terms of reducing running costs. A gas obtained by changing a component ratio of air in the atmosphere by separation or concentration may be supplied to the hollow fiber membrane elements 1, for example, in accordance with the characteristics of wastewater to be treated.

The membrane thickness of the microorganism layer is not particularly limited, and only needs to be adjusted to a thickness that allows optimal aerobic treatment and anaerobic treatment by performing an operation such as bubbling washing with air when the thickness reaches a predetermined thickness or more, or when a predetermined treatment time has elapsed, for example.

### Storage Step

The water treatment method according to an embodiment may include a storage step of storing the condensed water generated inside the plurality of hollow fiber membranes 11 in the hollow fiber membrane element 1 as a step before the water discharge step.

During the wastewater treatment, in each of the hollow fiber membrane elements 1, water vapor that permeates through the plurality of hollow fiber membranes 11 from wastewater and enters the hollow fiber membrane elements 1 and water vapor contained in the oxygen-containing gas are condensed and condensed water is generated inside the plurality of hollow fiber membranes 11. When the amount of condensed water generated inside the plurality of hollow fiber membranes 11 increases, the operation efficiency decreases due to a decrease in the oxygen permeability coefficient of the plurality of hollow fiber membranes 11 and a decrease in the effective membrane area, but when the amount of condensed water is not problematic, the condensed water can be retained in the hollow fiber membrane elements 1. Note that the second gas passage pipe in the lower portion of each of the hollow fiber membrane elements 1 has a function of storing the condensed water, but the discharge step is not necessarily performed after the storage step.

### Discharge Step

When it is confirmed that by the pressure gauge 34, the pressure of the residual gas in the condensed water discharge mechanism 18 and the gas discharge pipe 26 is decreased to a predetermined value, the gas supply amount control unit 30 increases the supply amount of the oxygen-containing gas, and thus, the flow rate of the residual gas discharged from the plurality of hollow fiber membranes 11 via the second gas passage pipe 14 and the condensed water discharge mechanism 18 is increased, and the condensed water is discharged from each of the hollow fiber membrane elements 1 together with the residual gas.

### Control Step

By controlling the discharge amount of the residual gas discharged from the plurality of hollow fiber membrane elements 1, it is possible to control the execution of the storage step of keeping the condensed water in the hollow fiber membrane elements 1 and the execution of the discharge step of discharging the condensed water together with the residual gas. In the control step, the discharge amount of the residual gas discharged from each of the plurality of hollow fiber membrane elements 1 is individually controlled. Thus, the storage step and the discharge step can be separately performed in each of the hollow fiber membrane elements 1 depending on the amount of condensed water generated in each of the plurality of hollow fiber membrane elements 1.

The flow rate of the residual gas in the condensed water discharge mechanism 18 in the discharge step is preferably from 0.3 to 8 m/s, more preferably from 1 to 6 m/s, and still more preferably from 1.5 to 2.5 m/s. When the flow rate of the residual gas is within the above range, the height at which the condensed water is lifted in the condensed water discharge mechanism can be 1.5 m or more, and thus, the condensed water can be efficiently discharged together with the residual gas to the outside of the hollow fiber membrane elements 1. When the flow rate of the residual gas is the lower limit or more, the height at which the condensed water is lifted in the condensed water discharge mechanism is likely to be high, and thus the present invention is more easily applied to a large element than a small element. On the other hand, when the flow rate of the residual gas is the upper limit or less, it is easy to suppress the generation of excessive energy for increasing the condensed water in the condensed water discharge mechanism.

By adjusting the supply amount (L/min) of the oxygen-containing gas to each of the hollow fiber membrane elements 1 and the inner diameter r (mm) of the condensed water discharge mechanism 18, the flow rate of the residual gas in the condensed water discharge mechanism 18 can be adjusted. The flow rate (m/s) of the residual gas is obtained by the following Equation. $v = {V}_{G} / S$

The symbols in Equation have the following meanings.
v: Flow rate of residual gas (m/s)
V_{G}: Supply amount of air to hollow fiber membrane element (L/min)
S: Cross-sectional area of hollow portion of condensed water discharge mechanism (mm²)

After the wastewater treatment, the microorganism layer is peeled off from each of the plurality of hollow fiber membranes 11 by, for example, a bubbling treatment. Thereafter, a sludge containing the peeled portion of the microorganism layer is recovered by using a solid-liquid separation method using a separation membrane or the like (not illustrated), and the wastewater treatment is completed.

As described above, in the present invention, the structure of the hollow fiber membrane unit is simple, and the conditions for discharging the condensed water can be individually controlled for each of the plurality of hollow fiber membrane elements. Accordingly, the condensed water in the hollow fiber membranes of each of the plurality of hollow fiber membrane elements can be efficiently discharged.

The present invention is not limited to the embodiment described above.

For example, in the hollow fiber membrane element 1, the gas supply port 20 is provided in the upper portion, but the present invention is not limited to this form. For example, a gas supply port not connected to the flow path 15 may be provided in the first end portion 14a of the second gas passage pipe 14 in the hollow fiber membrane element 1, the support mechanism 16 may be a tubular member, for example, a hollow support column, and the oxygen-containing gas supplied from the gas supply port may be supplied to the plurality of hollow fiber membranes 11 via the support mechanism 16 and the first gas passage pipe 12.

The water treatment method of the present invention is not limited to a method using the hollow fiber membrane unit 100 including the hollow fiber membrane elements 1. For example, as long as the discharge amount of the residual gas discharged from each of the plurality of hollow fiber membrane elements can be individually controlled, The water treatment method of the present invention may be a water treatment method using a hollow fiber membrane unit including a plurality of known hollow fiber membrane elements that discharge the residual gas without passing through the condensed water discharge mechanism.

In addition, a constituent unit in the above-described embodiment can be appropriately replaced with a known constituent unit without departing from the gist of the present invention, and the modifications described above may be combined as appropriate.

Hereinafter, the present invention will be described specifically with reference to Examples, but the present invention is not limited to the following description.

### Experiment Example 1

Five hollow fiber membrane elements, each having a height of 3 m and the same form as the hollow fiber membrane element 1 illustrated in FIG. 1, including a condensed water discharge mechanism as a cylindrical support column, and having a different inner diameter of the condensed water discharge mechanism were prepared, and the cross-sectional area for each of the inner diameters was obtained. The cross-sectional areas of the hollow portions of the five condensed water discharge mechanisms were 12.6 mm², 19.6 mm², 33.2 mm², 50.2 mm², and 132.7 mm², respectively. The supply amount of air to each of the hollow fiber membrane elements was set to 3 L/min, and the height of the condensed water lifted in each of the condensed water discharge mechanisms was measured.

The flow rate (m/s) of the residual gas passing through each of the condensed water discharge mechanisms was determined from the supply amount (L/min) of air to each of the hollow fiber membrane elements using the following Equation, and the relationship between the flow rate (m/s) of the residual gas in each of the condensed water discharge mechanisms and the lifting height (mm) of the condensed water was examined, and the results are shown in FIG. 5. $v = {V}_{G} / S$

The symbols in Equation have the following meanings.
v: Flow rate of residual gas (m/s)
V_{G}: Supply amount of air to hollow fiber membrane element (L/min)
S: Cross-sectional area of hollow portion of condensed water discharge mechanism (mm²)

From the results of FIG. 5, it was found that when the flow rate of the residual gas in the condensed water discharge mechanism is 0.3 m/s or more, the condensed water can be lifted by 1.5 m or more via the condensed water discharge mechanism, and can be efficiently discharged from a hollow fiber membrane element having a height of 1.5 m.

It was found that when the flow rate of the residual gas in the condensed water discharge mechanism is 1 m/s or more, the condensed water can be lifted by 2.4 m or more via the condensed water discharge mechanism, and can be efficiently discharged from a hollow fiber membrane element having a height of 2.4 m.

It was found that when the flow rate of the residual gas in the condensed water discharge mechanism is 2.5 m/s or more, the condensed water can be lifted by 3.0 m or more via the condensed water discharge mechanism, and can be efficiently discharged from a hollow fiber membrane element having a height of 3.0 m.

In addition, the supply amount of air to the hollow fiber membrane element in Patent Literature 1 (Example 1) is 10 L/min, whereas the amount of energy consumed in the present invention can be reduced by 70%.

As described above, as compared with the technique in the related art, it is possible to achieve both suppression of the amount of energy consumed during operation of the water treatment device and discharge of condensed water by using a lower air supply amount.

### Reference Signs List

1 Hollow fiber membrane element
10 Hollow fiber membrane sheet
11 Hollow fiber membrane
12 First gas passage pipe
13 Flow path
14 Second gas passage pipe
15 Flow path
16 Support mechanism
18 Condensed water discharge mechanism
20 Gas supply port
22 Gas discharge port
23 Flow path
24 Gas supply pipe
26 Gas discharge pipe
30 Gas supply amount control unit
32 Gas discharge amount control unit
34 Pressure gauge

## Claims

1. A water treatment method using a hollow fiber membrane unit including a plurality of hollow fiber membrane elements, the method comprising:
supplying an oxygen-containing gas to each of the plurality of hollow fiber membrane elements immersed in water to be treated;
allowing the oxygen-containing gas to permeate from inside to outside of a plurality of hollow fiber membranes constituting the plurality of hollow fiber membrane elements and forming a microorganism layer on a surface of each of the hollow fiber membranes;
discharging condensed water generated in each of the hollow fiber membranes together with a residual gas of the oxygen-containing gas that does not permeate through each of the hollow fiber membranes; and
individually controlling a discharge amount of the residual gas discharged from each of the plurality of hollow fiber membrane elements.

2. The water treatment method according to claim 1, wherein
each of the hollow fiber membrane elements includes the plurality of hollow fiber membranes, the plurality of hollow fiber membranes being gas permeable membranes, a first gas passage pipe, a second gas passage pipe, and a condensed water discharge mechanism, and is provided with a gas supply port for supplying the oxygen-containing gas and a gas discharge port,
each of the hollow fiber membranes is disposed in such a manner that a length direction of each of the hollow fiber membranes is a vertical direction,
the first gas passage pipe is a pipe for passage of the oxygen-containing gas supplied from the gas supply port, and is disposed to extend in a horizontal direction in a state of being connected to upper ends of the plurality of hollow fiber membranes,
the second gas passage pipe is a pipe for passage of the residual gas of the oxygen-containing gas that does not permeate through the hollow fiber membranes, and is disposed to extend in the horizontal direction in a state of being connected to lower ends of the plurality of hollow fiber membranes,
the condensed water discharge mechanism is a tubular member and is disposed in parallel to the hollow fiber membranes with both ends of the condensed water discharge mechanism being connected to the first gas passage pipe and the second gas passage pipe,
an inside of the first gas passage pipe, insides of the plurality of hollow fiber membranes, an inside of the second gas passage pipe, and an inside of the condensed water discharge mechanism are in communication with each other in this order and thus a flow path is formed, and
the gas discharge port for discharging the condensed water generated inside the plurality of hollow fiber membranes together with the residual gas through the flow path is provided in an upper portion of each of the hollow fiber membrane elements.

3. The water treatment method according to claim 2, wherein a supply amount (L/min) of the oxygen-containing gas to the hollow fiber membrane elements and an inside diameter r (mm) of the condensed water discharge mechanism are adjusted in such a manner that a flow rate of the residual gas in the condensed water discharge mechanism is from 0.3 to 8 m/s.

4. The water treatment method according to claim 1 or 2, wherein a microorganism layer derived from a microorganism or a bacterium in the water to be treated is formed on a surface of the plurality of hollow fiber membranes.

5. A hollow fiber membrane element comprising: a plurality of hollow fiber membranes which are gas permeable membranes; a first gas passage pipe; a second gas passage pipe; and a condensed water discharge mechanism, the hollow fiber membrane element being provided with a gas supply port for supplying an oxygen-containing gas and a gas discharge port, and the hollow fiber membrane element being immersed in water to be treated, wherein
the plurality of hollow fiber membranes are disposed in such a manner that a length direction of the plurality of hollow fiber membranes is a vertical direction,
the first gas passage pipe is a pipe for passage of the oxygen-containing gas supplied from the gas supply port, and is disposed to extend in a horizontal direction in a state of being connected to upper ends of the plurality of hollow fiber membranes,
the second gas passage pipe is a pipe for passage of a residual gas of the oxygen-containing gas that does not permeate through the hollow fiber membranes, and is disposed to extend in the horizontal direction in a state of being connected to lower ends of the hollow fiber membranes,
the condensed water discharge mechanism is a tubular member and is disposed in parallel to the hollow fiber membranes with both ends of the condensed water discharge mechanism being connected to the first gas passage pipe and the second gas passage pipe,
an inside of the first gas passage pipe, insides of the plurality of hollow fiber membranes, an inside of the second gas passage pipe, and an inside of the condensed water discharge mechanism are in communication with each other in this order and thus, a flow path is formed, and
the gas discharge port for discharging condensed water generated inside the plurality of hollow fiber membranes together with the residual gas through the flow path is provided in an upper portion of the hollow fiber membrane element.

6. The hollow fiber membrane element according to claim 5, wherein the condensed water discharge mechanism is a hollow support column.

7. The hollow fiber membrane element according to claim 5, wherein one end of a gas discharge pipe is connected to the gas discharge port, and the other end of the gas discharge pipe is disposed above a liquid level.

8. The hollow fiber membrane element according to claim 6, wherein a ratio r/R of an inner diameter r (mm) of the support column to an outer diameter R (mm) of the support column is from 0.50 to 0.70.

9. The hollow fiber membrane element according to claim 5, further comprising a gas supply amount control unit that is configured to control a supply amount of the oxygen-containing gas to the gas supply port.

10. The hollow fiber membrane element according to claim 5, further comprising a gas discharge amount control unit that is configured to control a discharge amount of the residual gas from the gas discharge port.

11. The hollow fiber membrane element according to claim 5, wherein a microorganism layer derived from a microorganism or a bacterium is formed on a surface of the hollow fiber membranes.

12. A hollow fiber membrane unit comprising a plurality of the hollow fiber membrane elements described in any one of claims 5 to 11, wherein
gas supply paths to the gas supply ports of the respective hollow fiber membrane elements are independent of each other, and gas discharge paths from the gas discharge ports of the respective hollow fiber membrane elements are independent of each other.

13. A water treatment device comprising one or more hollow fiber membrane units described in claim 12.
